(19) **Europäisches Patentamt / European Patent Office / Office européen des brevets**

(11) **EP 1 483 693 B1**

(12) **FASCICULE DE BREVET EUROPEEN**

(45) Date de publication et mention
de la délivrance du brevet:
**06.08.2008 Bulletin 2008/32**

(51) Int Cl.:
***G06F 17/30*** *(2006.01)*

(21) Numéro de dépôt: **03718905.7**

(22) Date de dépôt: **21.02.2003**

(86) Numéro de dépôt international:
**PCT/FR2003/000576**

(87) Numéro de publication internationale:
**WO 2003/073320 (04.09.2003 Gazette 2003/36)**

(54) **REPRESENTATION INFORMATIQUE D'UNE STRUCTURE DE DONNEES ARBORESCENTE ET METHODES DE CODAGE/DECODAGE ASSOCIEES**

DARSTELLUNG EINER BAUMDATENSTRUKTUR UND ASSOZIIERTES KODIERUNGS-/
DEKODIERUNGSVERFAHREN

COMPUTER REPRESENTATION OF A DATA TREE STRUCTURE AND THE ASSOCIATED
ENCODING/DECODING METHODS

(84) Etats contractants désignés:
**AT BE BG CH CY CZ DE DK EE ES FI FR GB GR
HU IE IT LI LU MC NL PT SE SI SK TR**

(30) Priorité: **27.02.2002 FR 0202664**

(43) Date de publication de la demande:
**08.12.2004 Bulletin 2004/50**

(73) Titulaire: **FRANCE TELECOM
75015 Paris (FR)**

(72) Inventeur: **LASSALLE, Edmond
F-22300 Lannion (FR)**

(74) Mandataire: **Vidon, Patrice
Cabinet Vidon
Technopole Atalante
16B Rue de Jouanet
BP 90333
35703 Rennes Cedex 7 (FR)**

(56) Documents cités:
**US-A- 5 752 243**

- **CHANG H: "BUBBLE STRUCTURE AND OPERATION TO FACILITATE TREE TRAVERSAL" IBM TECHNICAL DISCLOSURE BULLETIN, IBM CORP. NEW YORK, US, vol. 26, no. 9, 1 février 1984 (1984-02-01), pages 4766-4777, XP000714569 ISSN: 0018-8689**
- **LAM S W ET AL: "REPRESENTING LEXICONS BY MODIFIED TRIE FOR FAST PARTIAL STRING MATCHING" CHARACTER RECOGNITION TECHNOLOGIES. SAN JOSE, FEB. 1 - 2, 1993, BELLINGHAM, SPIE, US, 1993, pages 229-237, XP000628870 ISBN: 0-8194-1139-6**
- **DUNDAS III J A: "IMPLEMENTING DYNAMIC MINIMAL-PREFIX TRIES" SOFTWARE PRACTICE & EXPERIENCE, JOHN WILEY & SONS LTD. CHICHESTER, GB, vol. 21, no. 10, 1 octobre 1991 (1991-10-01), pages 1027-1040, XP000297892 ISSN: 0038-0644**

**Description**

La présente invention concerne une représentation informatique d'un arbre orienté représentant l'organisation d'un ensemble de données, notamment d'un dictionnaire. La présente invention concerne également une méthode de codage dudit arbre orienté en ladite représentation informatique. La présente invention concerne encore une méthode de codage d'une donnée appartenant audit ensemble en un index de ladite représentation informatique. La présente invention concerne enfin une méthode de décodage permettant de retrouver à partir d'un index de ladite représentation informatique ladite donnée correspondante.

Préalablement à l'exposé de l'état de la technique, il convient de définir un certain nombre de termes qui seront utilisés par la suite.

On appelle graphe orienté (dénommé ci-après simplement graphe) un couple G=(S,A) où S est un ensemble de sommets (dénommés ci-après également noeuds) et A est un sous-ensemble de SxS, appelé ensemble des arcs.

Un chemin du graphe est une suite ordonnée $(s_0, s_1, .., s_n)$ de sommets tels que $(s_{i-1}, s_i)$, est un arc, pour i=1,..n. lorsque $s_n = s_0$ avec n≥1, le chemin est appelé circuit ou cycle. Un graphe est dit connexe si deux noeuds quelconques de ce graphe sont reliés par un chemin.

Un arbre est défini comme un graphe connexe sans circuit. On peut montrer que deux sommets quelconques d'un arbre sont reliés par un chemin unique. Un arbre possède un sommet particulier R, tel que tout sommet s distinct de R est relié à ce dernier par un chemin. Ce sommet particulier est appelé racine de l'arbre.

Pour un sommet S donné, on appelle descendant de S tout sommet $s_d$ de l'arbre tel qu'il existe un chemin entre s et $s_d$. Réciproquement, pour un sommet s donné, on appelle ancêtre de s tout sommet $S_a$ de l'arbre tel qu'il existe un chemin entre $S_a$ et s. On appelle sommet fils d'un sommet S un descendant $s_f$ de s tel que $(S, s_f) \in$ A. Pour tout sommet s, de l'arbre on appelle sous-arbre issu de s, l'arbre de racine s comprenant tous les descendants de s.

Enfin, on appelle feuille tout sommet de l'arbre ne possédant pas de descendant.

De nombreuses méthodes de traitement de l'information font appel à une représentation des données selon une structure arborescente (ou arbre), notamment des méthodes de classification, de compression ou de stockage d'information.

Le document, Chang H: "Bubble structure and operation to facilitate free traversal", IBM Technical disclosure Bulletin, vol-26, no. 9, divulgue un matériel bulle et un algorithme qui exigent au moins deux tableaux pour representer un abre dans une mémoire.

Selon le type d'application considéré, les données peuvent être des chaînes de caractères, des suites de phonèmes, des formes d'onde, des patterns de luminance/chrominance etc.

Sans perte de généralité, nous considérerons par la suite que les données sont constituées de chaînes d'entités élémentaires ou caractères (par exemple des lettres, des idéogrammes, des chiffres, des signes alpha-numériques). L'ensemble de ces caractères possibles constitue un alphabet. Nous supposerons que cet alphabet est muni d'une relation d'ordre total, appelé ordre alphabétique.

Dans de nombreuses applications de types « moteurs de recherche », « recherche dans un annuaire », « recherche dans un dictionnaire » etc., un volume très important de données doit pouvoir être stocké et accédé, ce qui impose des contraintes sévères en conditions d'exploitation réelle, notamment pour des accès en ligne.

Chaque donnée doit pouvoir être accessible rapidement sans faire appel à de grandes ressources de calcul. Aussi, pour réduire les temps d'accès, des volumes importants de données doivent résider en mémoire centrale. Afin de ne pas augmenter démesurément la taille de cette mémoire, il est souvent nécessaire d'effectuer une compression préalable des données. Avantageusement, les données doivent pouvoir être accédées sans avoir à être décompressées, ce qui pénaliserait là encore les temps d'accès.

Dans les types d'applications considérées plus haut, un traitement dissymétrique des données est envisageable : la phase de compression des données peut comprendre un traitement relativement long et complexe alors que celle permettant leur accès et leur récupération doit être simple et rapide. Les données peuvent être ainsi stockées en mémoire sous une forme compressée et figée, leur mise à jour étant réalisée « off-line» avant qu'elles soient rebasculées en ligne.

Il existe une structure d'organisation des données qui se prête particulièrement bien à la compression : celle d'arbre telle que définie plus haut. Elle se rencontre notamment dans les dictionnaires ou les annuaires. Un dictionnaire au sens commun du mot est un fichier de données (appelée également entrées), chaque donnée étant constituée d'une chaîne de caractères alphabétiques, ces chaînes étant organisées selon une structure arborescente.

En pratique, dans une représentation informatique, chaque donnée du dictionnaire est associé à un index. La recherche d'une chaîne de caractères (ou mot) dans le dictionnaire revient à identifier l'index du mot correspondant. Ainsi un texte peut être représenté par une suite d'index, plus adaptée au traitement informatique que la représentation initial.

Différents types de représentation ont été proposés dans l'état de la technique et notamment :

- sous forme de table de dichotomie, avec utilisation d'une compression de Ziv-Lempel
- sous forme de table de hash
- sous forme d'arbre lexical

Ces différents types de représentation conduisent à des performances équivalentes en cas d'accès parfait. On appelle accès parfait un mode d'accès où l'on cherche la chaîne de caractères exacte dans le dictionnaire correspondant au mot à analyser, sans prendre en compte les erreurs ou les altérations.

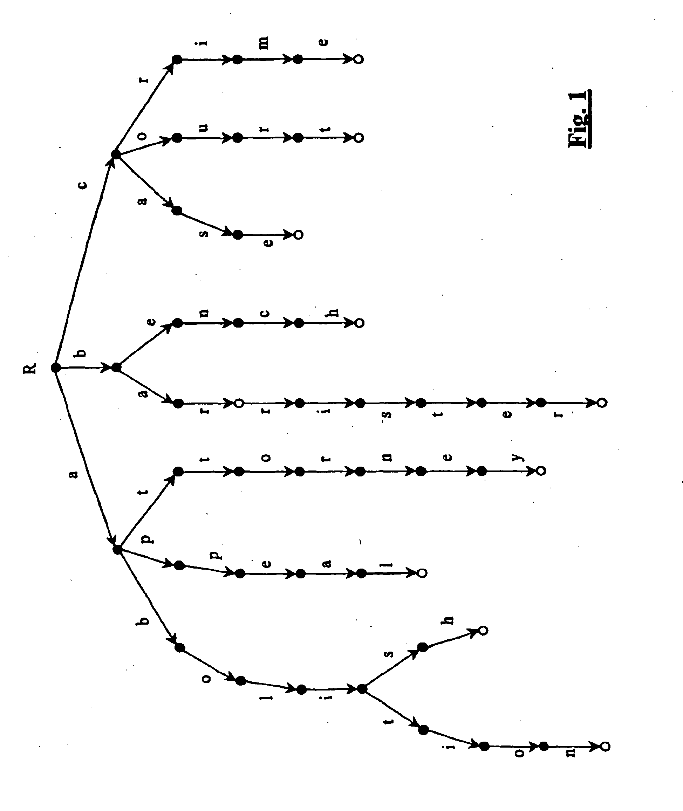

La représentation par arbre lexical suppose une analyse (ou « parsing ») des chaînes de caractères. Un exemple d'arbre lexical est donné en Fig. 1 pour le dictionnaire Δ suivant :

$$\Delta = \{\text{abolish, abolition, appeal, attorney, bar, barrister, bench, case, court, crime}\}$$

On remarque que dans l'arbre lexical, les arcs sont associés aux caractères des mots du dictionnaire. Plus précisément, à chaque arc de l'arbre est associée une étiquette, chaque étiquette ayant comme label un caractère. L'arbre lexical est la réunion de tous les chemins dont le squelette correspond à un mot du dictionnaire. On appelle squelette d'un chemin la chaîne des caractères des étiquettes des arcs constituant ce chemin. Un mot du dictionnaire est encore appelé « entrée » du dictionnaire.

On notera que les feuilles de l'arbre lexical ont été représentées par des cercles alors que les autres sommets ont été représentés par des disques. La racine de l'arbre a été indiquée par *R*.

On suppose que l'arbre est indexé, c'est-à-dire qu'à chaque sommet est associé un index. Une opération élémentaire sur un arbre lexical est de rechercher à partir d'un mot donné, l'index de l'entrée du dictionnaire correspondante. Cette opération nécessite de parcourir l'arbre selon les arcs étiquetés par les caractères successifs composant le mot.

Plus particulièrement, l'algorithme de recherche met en oeuvre une fonction *Analyser Mot* qui retourne comme valeur l'index (index-associé (*s*)) de l'entrée du dictionnaire si cette dernière y est présente, ou, à défaut, un code de non-identification (Index-Mot-Inconnu). Elle est donnée ci-après en pseudo-code C :

```
Fonction NumeroIndex AnalyserMot (chaine MotAnalyse, sommet Racine)
Debut
        sommet s = Racine ;
        Pour chaque Caractère de MotAnalyse Faire
                Si fin-de-mot (MotAnalyse) et s est une feuille
                        Alors retourner index-associé (s) ;
                Si Caractère correspond à une étiquette d'un arc issu de s
                        Alors s = descendant-correspondant(s) ;

                Sinon retourner Index-Mot-Inconnu ;
Fin
```

La navigation par les instructions *s*=descendant-correspondant(*s*) suppose que l'on dispose d'une représentation informatique de l'arbre lexical.

De manière générale, il est nécessaire de disposer d'une représentation informatique d'un arbre pour pouvoir le parcourir, l'utiliser et le modifier aisément.

Selon, une première représentation informatique connue, un arbre est représenté par un tableau d'adjacence $M=(m_{ij})$ i=0,..,n; j=0,..,n stocké en mémoire avec $m_{ij}=1$ si $(s_i,s_j)\in A$.

**EP 1 483 693 B1**

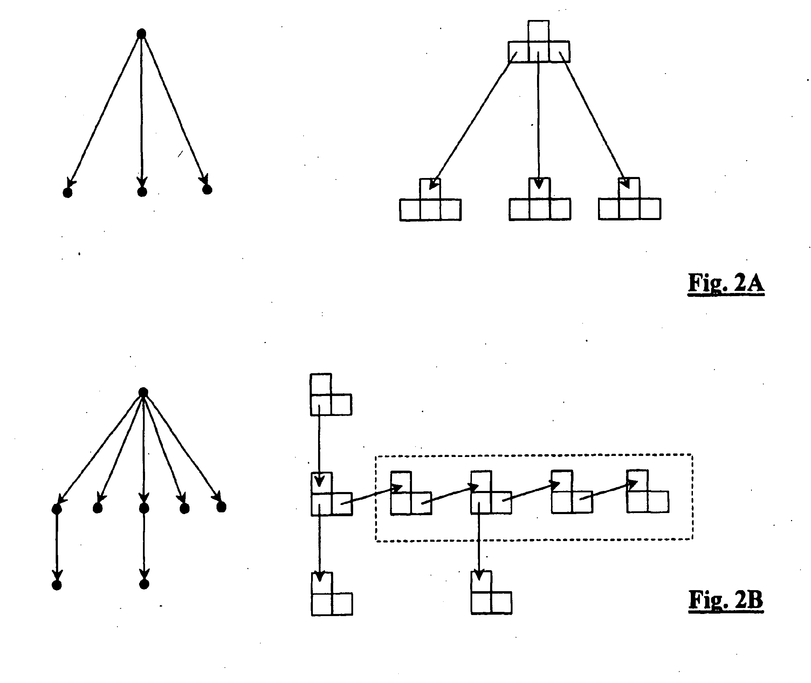

Selon une représentation informatique plus courante, un arbre est représenté comme une séquence de pointeurs informatiques. Selon une première variante connue illustrée en Fig. 2A, chaque noeud est représenté par une valeur (ou index) et un tableau de pointeurs pointant vers ses noeuds fils. La taille du tableau correspond au nombre maximum de fils (k) que peut posséder un noeud de l'arbre (l'arbre est dit en ce cas « k-aire »). La Fig. 2A donne un exemple de représentation d'un arbre 3-aire selon cette variante.

Le codage des fils d'un noeud par un tableau de pointeurs présente l'inconvénient de consommer beaucoup d'espace mémoire lorsque l'arbre contient un petit nombre de noeuds ayant beaucoup de fils et de nombreux autres noeuds ayant peu de fils. Selon une seconde variante connue de représentation, on remédie à cette difficulté en utilisant pour un noeud donné un pointeur vers l'un de ses noeuds fils, appelé fils aîné, et un pointeur du fils aîné vers une liste chaînée de ses frères. La Fig. 2B donne un exemple de représentation selon cette seconde variante, pour un arbre 5-aire.

Les pointeurs permettent de modifier rapidement la structure de l'arbre mais ils sont relativement coûteux en espace mémoire. Qui plus est, la détection d'une relation de descendance entre de noeuds n'est pas immédiate. Elle suppose de déterminer le chemin qui relie les deux noeuds, ce qui, dans le cadre d'une représentation par pointeurs, impliquent des ressources de calcul importantes. On peut réduire considérablement la quantité de calculs à effectuer en mémorisant la fermeture transitive de l'arbre, auquel cas un noeud pointe vers chacun de ses descendants. Cependant, cette dernière option est particulièrement gourmande en espace mémoire.

Le problème à la base de l'invention est de proposer une représentation informatique d'un arbre qui n'occupe que peu d'espace mémoire, qui permette de le parcourir aisément et de le modifier simplement.

Ce problème est résolu par la représentation informatique d'un arbre représentatif de l'organisation d'un ensemble de données, en particulier d'un dictionnaire de données, chaque donnée étant associée à un noeud particulier dudit arbre, cette représentation comprenant une table de valeurs stockées dans une mémoire, lesdites valeurs étant représentatives des rangs des noeuds dudit arbre ordonnés selon une première relation d'ordre total, les adresses auxquelles lesdites valeurs étant stockées étant représentatives des rangs des noeuds dudit arbre ordonnés selon une seconde relation d'ordre total.

Avantageusement, la première relation d'ordre total est une combinaison d'une relation d'ordre de descendance ordonnant un noeud par rapport à ses descendants et d'une relation d'ordre de primogéniture ordonnant les noeuds fils d'un même noeud.

Selon un premier mode de réalisation, un premier noeud de l'arbre est inférieur à un second noeud de l'arbre selon ladite première relation d'ordre total si le second noeud est un descendant du premier noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon la relation d'ordre de primogéniture.

Selon un second mode de réalisation, un premier noeud de l'arbre est supérieur à un second noeud de l'arbre selon ladite première relation d'ordre total si le second noeud est un descendant du premier noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon la relation d'ordre de primogéniture.

Avantageusement, la seconde relation d'ordre total est une combinaison de la relation d'ordre inverse de ladite relation d'ordre de descendance et de ladite relation d'ordre de primogéniture.

Selon une première variante, un premier noeud de l'arbre est inférieur à un second noeud de l'arbre selon ladite seconde relation d'ordre total si le premier noeud est un descendant du second noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon ladite relation d'ordre de primogéniture.

Selon une seconde variante, un premier noeud de l'arbre est supérieur à un second noeud de l'arbre selon ladite seconde relation d'ordre total si le premier noeud est un descendant du second noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon ladite relation d'ordre de primogéniture.

Si les données sont des suites de caractères d'un alphabet muni d'un ordre alphabétique, chaque arc dudit arbre étant associé à un caractère d'au moins une donnée, la relation d'ordre de primogéniture entre deux fils d'un même noeud peut être donnée par la relation d'ordre alphabétique entre les caractères associés aux arcs respectifs entre ledit noeud et ses deux fils.

L'invention concerne également une méthode de codage d'un arbre orienté représentatif de l'organisation d'un ensemble de données, notamment d'un dictionnaire, chaque donnée dudit ensemble étant associée à un noeud particulier dudit arbre, dans laquelle on attribue à chaque noeud dudit arbre un premier et un second index, le premier index étant représentatif du rang du noeud selon une première relation d'ordre total ordonnant les noeuds dudit arbre, le second index étant représentatif du rang du noeud selon une seconde relation d'ordre total, la première relation d'ordre total étant une combinaison d'une relation d'un ordre de descendance ordonnant un noeud par rapport à ses descendants et d'une relation d'ordre de primogéniture ordonnant les noeuds fils d'un même noeud, la seconde relation d'ordre total étant une combinaison de la relation d'ordre inverse de ladite relation d'ordre de descendance et de ladite relation d'ordre de primogéniture.

Avantageusement la méthode de codage comprend un appel récursif d'une étape de calcul fournissant pour un noeud quelconque de l'arbre, la taille du sous-arbre issu dudit noeud.

Pour un premier fils et un second fils d'un même noeud, dit noeud père, adjacents dans une liste des fils ordonnée selon ladite relation l'ordre de primogéniture, l'étape de calcul détermine le premier index du second fils à partir du premier index du premier fils et de la taille du sous-arbre issu du premier fils, et le second index du second fils à partir du second index du premier fils et de la taille du sous-arbre issu du second fils.

Ladite étape de calcul détermine le premier index du fils classé premier dans ladite liste à partir du premier index dudit noeud père et le second index dudit noeud père à partir du second index du fils classé dernier dans ladite liste.

Ladite étape de calcul détermine également la taille du sous-arbre issu dudit noeud père à partir de la somme des tailles des sous-arbres issus de ses fils.

Avantageusement, ladite méthode de codage opère sur une première représentation dudit arbre au moyen de pointeurs dans laquelle, pour un noeud donné, un premier type de pointeur fournit un noeud fils selon la relation d'ordre de descendance et un second type de pointeur fournit la liste de ses autres fils.

L'invention est également définie par une méthode de codage d'une donnée d'entrée appartenant à un ensemble de données organisées selon une structure d'arbre orienté, notamment à un dictionnaire de données, les données étant formées de suites de caractères d'un alphabet muni d'un ordre alphabétique, chaque donnée étant associée à un noeud particulier dudit arbre et à chaque arc dudit arbre étant associé un caractère, dans laquelle ledit arbre étant représenté au moyen de la représentation informatique précité, on parcourt l'arbre de noeud en noeud selon un chemin partant de la racine et l'on analyse ladite donnée d'entrée caractère par caractère, le noeud suivant d'un noeud courant dudit chemin étant choisi parmi les fils de ce dernier, le choix étant effectué au moyen d'une succession d'étapes de comparaison, chaque étape de comparaison comparant le caractère en cours de ladite donnée d'entrée et le caractère associé à l'arc reliant le noeud courant à l'un de ses fils, le parcours n'étant interrompu que lorsque la ladite donnée d'entrée est entièrement analysée, la méthode fournissant comme valeur codée de ladite donnée d'entrée un index fonction de l'adresse de la table de ladite représentation informatique représentative du dernier noeud dudit chemin.

L'invention est encore définie par une méthode de décodage d'un index représentatif d'une donnée appartenant à un ensemble de données organisées selon une structure d'arbre orienté, en particulier d'un dictionnaire de données, les données étant formées de suites de caractères d'un alphabet muni d'un ordre alphabétique, chaque donnée étant associée à un noeud particulier dudit arbre et à chaque arc dudit arbre étant associé un caractère, dans laquelle ledit arbre étant représenté au moyen de la représentation informatique précité, on parcourt l'arbre selon un chemin partant de la racine, le noeud suivant un noeud courant dudit chemin étant choisi parmi les fils de ce dernier, le choix étant effectué au moyen d'une succession d'étapes de comparaison, chaque étape de comparaison comparant ledit index à un index représentatif de l'un desdits fils dans ladite représentation informatique, la méthode fournissant comme donnée décodée la chaîne des caractères associés aux arcs formant ledit chemin.

Les caractéristiques de l'invention mentionnées ci-dessus, ainsi que d'autres, apparaîtront plus clairement à la lecture de la description suivante de certains modes de réalisation, ladite description étant faite en relation avec les dessins joints, parmi lesquels :

La Fig. 1 représente un exemple d'arbre lexical ;
La Fig. 2A montre une première représentation informatique d'un arbre à l'aide de pointeurs ;
La Fig. 2B montré une seconde représentation informatique d'un arbre à l'aide de pointeurs ;
La Fig. 3A illustre sur un exemple une méthode de codage d'arbre selon un premier mode de réalisation de l'invention ;
La Fig. 3B montre une première variante de représentation informatique de l'arbre de la Fig. 3A ;
La Fig. 3C montre une seconde variante de représentation informatique de l'arbre de la Fig. 3A ;
La Fig. 4 illustre une portion d'arbre avant indexation par rang préfixe et rang postfixe.

L'idée à la base de l'invention est de créer une nouvelle représentation informatique d'un arbre à partir d'une relation d'ordre total traduisant les relations de dépendance entre noeuds.

La relation de dépendance entre noeuds induit une relation d'ordre partiel sur l'ensemble des noeuds de l'arbre. Par exemple, si l'on convient pour deux noeuds $s_1$ et $s_2$ de l'arbre que : $s_1 > s_2$ si et seulement si $s_2$ est un descendant de $s_1$, on dispose d'une ralation d'ordre. Cependant cet ordre n'est qu'un ordre partiel puisque tous les noeuds de l'arbre ne peuvent être ainsi comparés (par exemple les fils d'un même noeud).

On peut construire une relation d'ordre total sur les noeuds d'un arbre si l'on sait ordonner tous les fils d'un même noeud. L'ordre selon lequel on ordonne les fils d'un même noeud sera conventionnellement appelé ordre de primogéniture. Pour un arbre lexical, dont les étiquettes des arcs contiennent des caractères alphabétiques, on peut convenir que deux fils $s_1$ et $s_2$ d'un même noeud $S$ satisfont à la relation $s_1 > s_2$ si le caractère de l'étiquette associée à l'arc $(S,s_1)$ précède celui de l'étiquette associée à l'arc $(S,s_2)$. Autrement l'ordre alphabétique des labels des étiquettes induit un ordre de primogéniture sur les noeuds fils d'un même noeud.

La combinaison de la relation d'ordre partiel de descendance (notée ci-après $\underset{D}{>}$ ou $\underset{D}{<}$ ) et de la relation l'ordre de primogéniture (notée ci-après $\underset{P}{>}$ ou $\underset{P}{<}$) permet d'obtenir une relation d'ordre total sur l'ensemble des noeuds. Cette combinaison peut être réalisée de plusieurs manières différentes :

- relation d'ordre préfixe (notée conventionnellement $\underset{pref}{<}$ ):

$$a \underset{pref}{<} b \ \text{ si } \ a \underset{D}{<} b \ \text{ ou } \ a' \underset{P}{<} b'$$

où $a'$ et $b'$ sont les fils de l'ancêtre commun à $a$ et $b$, tels que $a$ descend ou est confondu avec $a'$ et $b$ descend ou est confondu avec $b'$.

Autrement dit, le noeud $a$ est inférieur au noeud $b$ au sens de l'ordre préfixe si $b$ est un descendant de $a$ ou $a'$ est un frère aîné de $b'$.

- relation d'ordre préfixe inverse (notée conventionnellement $\underset{frep}{<}$)

$$b \underset{frep}{<} a \ \text{ si } \ a \underset{D}{<} b \ \text{ ou } \ a' \underset{P}{<} b'$$

- relation d'ordre postfixe inverse (notée conventionnellement $\underset{post}{<}$ ):

$$a \underset{post}{<} b \ \text{ si } \ a \underset{D}{>} b \ \text{ ou } \ a' \underset{P}{<} b'$$

autrement dit le noeud $a$ est inférieur au noeud $b$ au sens de l'ordre postfixe si $a$ est un descendant de $b$ ou $a'$ est un frère aîné de $b'$.

- relation d'ordre postfixe inverse (notée conventionnellement $\underset{tsop}{<}$ ):

$$b \underset{tsop}{<} a \ \text{ si } \ a \underset{D}{>} b \ \text{ ou } \ a' \underset{P}{<} b'$$

Etant donné que deux noeuds quelconques d'un arbre sont, soit descendants l'un de l'autre, soit descendants d'un ancêtre commun, les relations d'ordre définies ci-dessus sont des relations d'ordre total.

Les relations d'ordre $\underset{pref}{<}$ (ou $\underset{frep}{<}$ ) et $\underset{post}{<}$ (ou $\underset{tsop}{<}$) permettent donc d'ordonner entièrement l'ensemble S des noeuds de l'arbre. Autrement dit, à chacune de ces relations d'ordre on peut associer une fonction « rang » de S dans $[0,n]$, par exemple :

$$RangPrefixe : \ S \rightarrow [0,n]$$

telle que $s_1 \underset{pref}{<} s_2$ si et seulement si $RangPrefixe(s_1) < RangPrefixe(s_2)$

$$RangPostfixe : S \rightarrow [0,n]$$

telle que $s_1 \underset{post}{<} s_2$ si et seulement si $RangPostfixe(s_1) < RangPostfixe(s_2)$

*RangPrefixe* et *RangPostfixe* sont des morphismes d'ensembles ordonnés. De même manière on peut définir des fonctions rang *RangPrefixeInverse* et *RangPostfixeInverse* à partir des relations d'ordre $\underset{frep}{<}$ et $\underset{tsop}{<}$ :

$$RangPrefixeInverse : S \rightarrow [0,n]$$

telle que $s_1 \underset{frep}{<} s_2$ ssi $RangPrefixeInverse(s_1) < RangPrefixeInverse(s_2)$

$$RangPostfixeInverse : S \rightarrow [0,n]$$

telle que $s_1 \underset{tsop}{<} s_2$ ssi si $RangPosfixeInverse(s_1) < RangPostfixeInverse(s_2)$

Selon un premier mode de réalisation, on utilise, pour construire la représentation informatique, une bijection $T$ de [0,n] dans [0,n] définie par :

$$T : [0,n] \rightarrow [0,n]$$

$T = RangPostfixe \circ RangPrefixe^{-1}$.

Selon une variante de ce premier mode de réalisation, on utilise la bijection $T^1$.

De la même façon, on pourra utiliser les bijections formées par composition : $RangPostfixeInverse \circ Rang\text{-}Prefixe^{-1}$, $RangPostfixe \circ RangPrefixeInverse^{-1}$ ou $RangPostfixeInverse \circ RangPrefixeInverse^{-1}$ dans d'autres modes de réalisation de l'invention ou bien encore, dans des variantes de ceux-ci, les inverses de ces bijections.

Dans un but de simplification, nous limiterons l'exposé de l'invention à l'utilisation des bijections $T$ et $T^1$, bien que les autres bijections puissent être également utilisées .

Ladite bijection $T$ peut être représentée de manière informatique sous la forme d'un premier tableau de valeurs stockées en mémoire, le rang postfixe d'un noeud étant stocké à une adresse représentative du rang préfixe de ce noeud.

De même, la bijection $T^1$ peut être représentée de manière informatique sous la forme d'un second tableau de valeurs stockées en mémoire, le rang postfixe d'un noeud étant stocké à une adresse représentative du rang préfixe de ce noeud.

Un exemple fera mieux comprendre l'intérêt et l'utilisation de ces bijections.

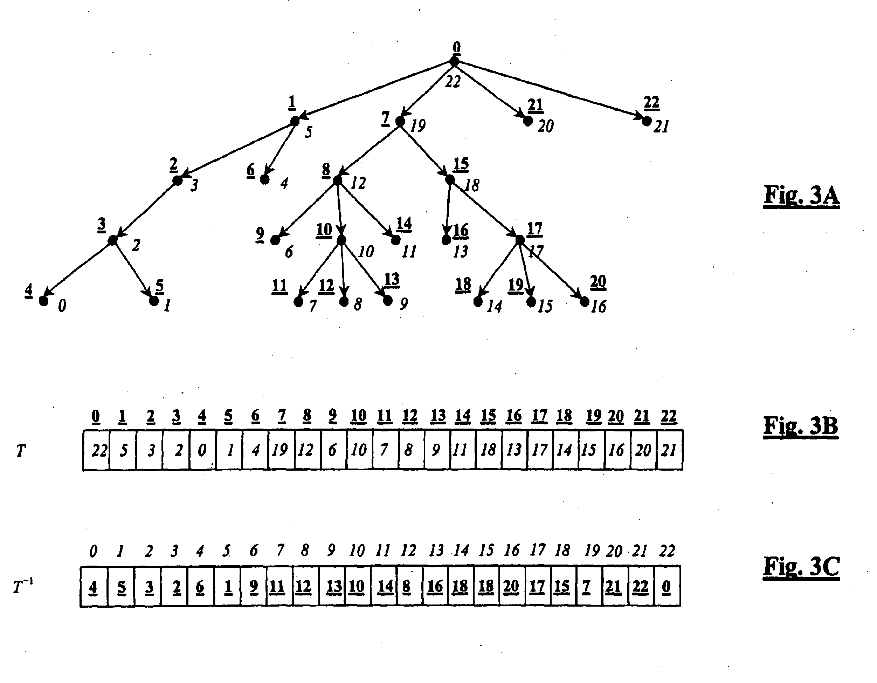

La Fig. 3A illustre un arbre dont les noeuds ont été indexés par les rangs préfixe (en gras et souligné) et les rangs postfixe (en italique). La relation d'ordre de primogéniture, par exemple induite par un ordre alphabétique sur les labels des étiquette dans le cas d'un arbre lexical, a été représentée conventionnellement dans le sens croissant de la gauche vers la droite. A chaque noeud $s$ est ainsi associé un couple :

$$(RangPrefixe(s), RangPostfixe(s))$$

Ces couples sont avantageusement stockés dans un tableau au moyen de la bijection $T$ (Fig. 3B) ou $T^1$ (Fig. 3C). En Fig. 3B les valeurs de rang postfixe ont été stockées aux adresses données par les valeurs de rang préfixe correspondantes. A l'inverse, en Fig. 3C les valeurs de rang préfixe ont été stockées aux adresses données par les valeurs de rang postfixe correspondantes.

Un premier avantage de la représentation informatique de l'arbre selon l'invention est de n'occuper qu'un espace mémoire de la taille de l'arbre (n+1) par opposition à une représentation classique par pointeurs (Figs. 2A et 2B) nécessitant une occupation mémoire au moins double.

Un second avantage essentiel de cette représentation informatique est de permettre très simplement de détecter une relation de dépendance entre deux noeuds de l'arbre. En effet, pour déterminer si un noeud $s_2$ est dépendant d'un noeud $s_1$, il suffit de comparer $RangPrefixe(s_1)$ à $RangPrefixe(s_2)$ d'une part, et $RangPostfixe(s_1)$ à $RangPostfixe(s_2)$, d'autre part :

$s_2$ est dépendant de $s_1$ si et seulement si l'on a:

$$RangPrefixe(s_2) > RangPrefixe(s_1) \text{ et } RangPostfixe(s_2) < RangPostfixe(s_1)$$

Ainsi, dans l'exemple de la Fig. 3A, on vérifie que le noeud représenté par le couple ($RangPrefixe, RangPostfixe$) = (**5**, $1$) est bien dépendant de celui représenté par le couple ($RangPrefixe, RangPosfixe$)= (**1**, $5$) mais non de celui représenté par le couple ($RangPrefixe, RangPostfixe$)= ($22$, **21**).

De la même façon, grâce au tableau de la Fig. 3B, il est très facile de déterminer les descendants ou les ancêtres d'un noeud donné. Par exemple, pour déterminer la liste des descendants du noeud (**8**, $12$), il suffit de balayer le tableau dans le sens des adresses croissantes à partir de l'adresse **8** et de rechercher parmi les données stockées celles qui sont inférieures au postfixe $12$ (ici $6, 10, 11, 7, 8, 9$). Ces valeurs indiquent les rangs postfixe des descendants du noeud en question. Pour déterminer la liste des ancêtres du noeud (**8**, $12$), il suffit de balayer le tableau dans le sens des adresses décroissantes à partir de l'adresse **8** et de rechercher parmi les données stockées celles qui sont supérieures au postfixe $12$ (ici $19, 22$). Ces valeurs indiquent les rangs postfixe des ancêtres du noeud en question.

On procède de manière duale à partir du tableau de la Fig. 3C. En reprenant l'exemple précédent, il suffit, pour déterminer la liste des descendants, de balayer le tableau dans le sens des adresses décroissantes à partir de l'adresse $12$ et de rechercher parmi les données stockées celles qui sont supérieures au préfixe **8** (ici **14, 10** ,**13**, **12, 11**, **9**). Ces valeurs indiquent les rangs préfixe des descendants du noeud en question. De même, pour déterminer la liste des ancêtres de (**8**, $12$), il suffit de balayer le tableau dans le sens des adresses croissantes à partir de l'adresse $12$ et de rechercher parmi les données stockées celles qui sont inférieures au préfixe **8** (ici **7**, **0**).

Un troisième avantage de la représentation informatique selon l'invention est de permettre un parcours aisé de l'arbre, soit de la racine vers les feuilles, parcours que l'on effectue par exemple lorsque l'on analyse une chaîne de caractères (mot) à l'aide d'un arbre lexical, soit des feuilles vers la racine, parcours que l'on effectue par exemple lorsque l'on génère une chaîne de caractères à partir de l'index d'un noeud.

Le parcours de l'arbre de la racine vers les feuilles suppose que l'on sache déterminer les fils d'un noeud donné. Comme nous allons le voir, le tableau de la Fig. 3B (ou celui de la Fig. 3C) permet de les retrouver rapidement.

Supposons que l'algorithme de navigation recherche les fils du noeud ($12$, **8**) et considérons le tableau de la Fig. 3B. Le tableau est balayé dans le sens des adresses croissantes à partir de l'adresse **8**. Comme précédemment, on recherche les données du tabeau inférieures à $12$. Lorsque l'on retient une donnée x inférieure à $12$, on ne considère plus les données suivantes qui sont inférieures à x. Autrement dit, on continue à balayer le tableau jusqu'à ce que l'on trouve à nouveau une donnée x' supérieure à x (mais toujours inférieure à la valeur initiale $12$). On itère le processus jusqu'à la fin du tableau. Ainsi dans l'exemple présent, on rencontre tout d'abord la valeur $6$ qui est retenue ($<12$) puis la valeur $10$ qui est retenue également ($6<10<12$). Les valeurs suivantes $7, 8, 9$ ne sont pas retenues car, si elles sont bien inférieures à $12$, elles ne sont pas supérieures à la dernière valeur retenue $10$. La valeur $11$ est ensuite retenue ($10<11<12$) mais les valeurs suivantes ne peuvent l'être car supérieures à $12$.

On procède de manière duale à partir du tableau de la Fig. 3C. En reprenant l'exemple précédent, on balaye le tableau dans le sens des adresses décroissantes à partir de l'adresse $12$ . Comme précédemment, on recherche les données stockées supérieures au préfixe **8**. Lorsque l'on rencontre une donnée **x** supérieure à **8** , on ne considère plus les données suivantes qui sont supérieures à **x**. Autrement dit, on continue à balayer le tableau jusqu'à ce que l'on trouve à nouveau une donnée **y** inférieure à **x** (mais toujours supérieure à la valeur initiale **8**). On itère le processus jusqu'à ce qu'on atteigne le début du tableau. Ainsi dans l'exemple présent, on rencontre tout d'abord la valeur **14** qui est retenue ($>$**8**) puis la valeur **10** qui est retenue également (**8**$<$**10**$<$**14**). Les valeurs suivantes **11**, **12**, **13** ne sont pas retenues car, si elles sont bien supérieures à **8**, elles ne sont pas inférieures à la dernière valeur retenue **10.** La valeur **9** est ensuite retenue (**8**$<$**9**$<$**10**) mais les valeurs suivantes ne peuvent l'être car inférieures à **8.**

Cette manière de déterminer les fils d'un noeud donné peut convenir pour les arbres de faible taille. Cependant, comme on le verra plus loin, pour des arbres de grande taille, il est plus rapide de calculer directement les rangs préfixe/ postfixe desdits fils.

On notera que, si l'on avait employé, au lieu des tableaux construits à partir des bijections *T* et *T*[1], des tableaux construits respectivement à partir des bijections *RangPostfixeInverse* o *RangPrefixe*[-1], *RangPostfixe* o *RangPrefixeInverse*[-1] ou *RangPostfixeInverse* o *RangPrefixeInverse*[-1] ou bien encore à partir des inverses de ces bijections, on aurait pu déterminer de manière similaire les fils d'un noeud donné, au prix éventuel d'un changement de sens de balayage et/ou de changement de sens des inégalités.

De la même façon, le parcours d'un arbre de ses feuilles vers sa racine suppose que l'on sache déterminer le père d'un noeud donné. Supposons que l'algorithme de navigation recherche le père du noeud (*12*, **8**) et considérons tout d'abord le tableau de la Fig. 3B. On balaye le tableau dans le sens des adresses décroissantes à partir de l'adresse **8** . La première donnée rencontrée supérieure à *12* donne l'indice postfixe du père du noeud en question (ici *19*)

Bien entendu, on procède de manière duale à partir du tableau de la Fig. 3C. Dans ce cas on balaye le tableau dans le sens des adresses croissantes à partir de l'adresse *12* . La première donnée rencontrée inférieure à **8** donne l'indice préfixe du père du noeud en question (ici **7**).

Pour transformer un arbre quelconque en sa représentation informatique, opération appelée codage de l'arbre, on doit tout d'abord procéder à une indexation des noeuds. Pour coder l'arbre sous la forme d'une représentation informatique selon l'invention, on doit indexer les noeuds au moyen des fonctions *Rangprefixe* et *Rangpostfixe* (ou des autres fonctions équivalentes vues plus haut. Sans perte de généralité, nous limiterons l'exposé de la méthode d'indexation selon l'invention aux deux fonctions précitées.

La méthode d'indexation opère sur une représentation informatique classique de l'arbre au moyen de pointeurs comme, par exemple, celle illustrée en Fig. 2B. Cette représentation informatique classique sera obtenue de manière connue à partir d'un fichier des entrées du dictionnaire. Le chaînage vertical des pointeurs correspond à une relation préfixe des entrées. Le chaînage horizontal des frères d'un même noeud se fait selon l'ordre de primogéniture, tel que celui hérité d'un classement des labels des étiquettes.

On initialise le rang préfixe de la racine à 0 puis on parcourt l'arbre à partir de la racine suivant les pointeurs de fils aîné jusqu'à ce que l'on atteigne une feuille (la plus à gauche selon la convention de représentation choisie ici). Le rang postfixe de cette feuille est initialisé à 0.

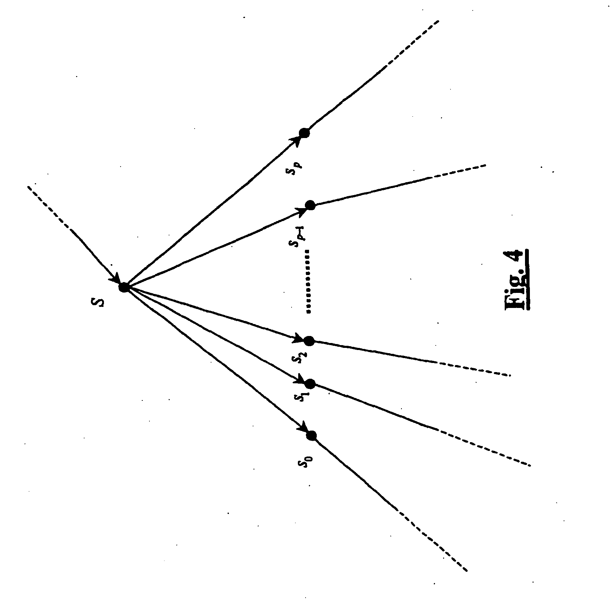

Soit maintenant un noeud *S* de l'arbre ayant pour fils $s_0$, $s_1$,..,$s_p$ rangés selon l'ordre croissant de primogéniture (c'est-à-dire ordonnés selon le chaînage horizontal), comme illustré en Fig. 4. On a les relations suivantes :

$$RangPrefixe(s_0) = RangPrefixe(S) + 1$$

$$RangPrefixe(s_{i+1}) = RangPrefixe(s_i) + \Gamma(s_i)$$

$$RangPostfixe(s_{i+1}) = RangPostfixe(s_i) + \Gamma(s_{i+1})$$

$$RangPostfixe(S) = RangPostfixe(s_p) + 1$$

$$\Gamma(S) = \sum_{i=0}^{p} \Gamma(s_i) + 1$$

où $\Gamma(s)$ est la taille du sous-arbre issu de *s*.

L'indexation par rang préfixe et rang postfixe peut être effectuée en une seule passe, à partir de la racine de l'arbre, en utilisant l'appel récursif d'une fonction qui retourne comme valeur, pour un sommet *s* donné, la taille $\Gamma(s)$ du sous-arbre qui en est issu. Cette fonction est donnée ci-après en pseudo-code C :

**Fonction** taille *CodageArbre* (sommet *S*, rang *Prefixe*, rang *Postfixe*, tableau *Bijection*)

**Debut**

```
TailleSousArbresDesFils=0 ;
Si S est une feuille Alors {
        Bijection[Prefixe]= Postfixe ;
        Retourner 1 ;
}
Sinon pour tous les descendants s de S Faire {
        TailleSousArbre=CodageArbre (s,
                        Prefixe+1,
                        Postfixe+TailleSousArbresDesFils,
                        Bijection) ;
        Prefixe+=TailleSousArbre ;
        TailleSousArbresDesFils+=TailleSousArbre ;
        Bijection[Prefixe]=Postfixe+TailleSousArbresDesFils ;
        Retourner TailleSousArbresDesFils+1;
Fin
```

On notera dans le programme ci-dessus que la variable *TailleSousArbre* est la taille du sous-arbre issu du noeud fils (s) courant et que la variable *TailleSousArbresDesFils* est la valeur cumulée des tailles des sous-arbres issus des noeuds fils déjà explorés.

La fonction *CodageArbre* crée directement une représentation informatique sous la forme d'un tableau d'index du type de la Fig. 3B, stocké en mémoire. Une fois cette représentation infromatique créée, la représentation initiale par pointeurs, devenue inutile, est supprimée de la mémoire.

Dans la suite, nous nous placerons, par souci de simplification, dans le contexte d'un dictionnaire organisé selon un arbre lexical, chaque entrée du dictionnaire correspondant à une feuille de l'arbre. Comme on vient de le voir, une représentation informatique sous forme de tableau de même taille que celle de l'arbre peut être obtenue par au moyen de la méthode de codage selon l'invention.

Cette représentation informatique est avantageusement utilisée pour rechercher, à partir d'une chaîne de caractères donnée, l'index de l'entrée du dictionnaire correspondante. On prendra conventionnellement comme index le rang préfixe de la feuille (alternativement on pourrait choisir son rang préfixe inverse). La recherche de l'index fait appel à une première méthode de parcours d'arbre de la racine vers les feuilles selon l'invention.

Réciproquement, cette représentation informatique est avantageusement utilisée pour générer, à partir de l'index d'une entrée du dictionnaire, la chaîne de caractères correspondante. La génération de la chaîne de caractères fait appel à une seconde méthode de parcours d'arbre de la racine vers les feuilles selon l'invention.

On considère d'abord le cas d'une recherche de l'index d'une chaîne de caractères $C$. L'arbre est parcouru à partir de la racine en suivant les arcs dont les étiquettes portent les caractères successifs de $C$.

Avantageusement, la première méthode de parcours d'arbre de la racine vers les feuilles selon l'invention opère de la manière suivante.

Lors de l'arrivée sur le premier fils $s_0$ d'un noeud $S$, on initialise :

$$RangPrefixe(s_0)=RangPrefixe(S)+1$$

et l'on calcule la taille $\Gamma(s_0)$ issu de $s_0$ à partir de :

$$\Gamma(s_0) = RangPostfixe(s_0) - DernierPostfixe$$

où *DernierPostfixe* est le rang postfixe du dernier noeud dont on a abandonné le parcours du sous-arbre (en d'autres termes, le rang postfixe de la racine du dernier sous-arbre élagué dans le parcours). A titre d'illustration, si en Fig. 3A le noeud de rang postfixe 5 n'a pas été retenu parce que l'arc reliant la racine et ce noeud ne porte pas le caractère recherché, le sous-arbre issu de ce noeud n'est pas parcouru et l'on a *DernierPostfixe* =5. On continue ensuite le parcours par le noeud de rang postfixe 19 et, en cas de succès, par celui de rang postfixe 12. La taille du sous-arbre issu de ce noeud (premier fils $s_0$ du noeud $S$ de rang postfixe 19) est effectivement 7.

On détermine ensuite les rangs préfixes des fils successifs $s_i$ de $S$ au moyen des relations de récurrence suivantes:

$$RangPrefixe(s_{i+1}) = RangPrefixe(s_i) + \Gamma(s_i)$$

$$\Gamma(s_{i+1}) = RangPostfixe(s_{i+1}) - RangPostfixe(s_i)$$

A chaque fils exploré $s_i$, on teste si le caractère en cours $c$ de $C$ est égal au caractère porté par l'étiquette de l'arc joignant $S$ à $s_i$. Si ce n'est pas le cas on poursuit l'exploration avec le fils suivant $s_{i+1}$ et ainsi de suite jusqu'à ce que l'on ait trouvé le caractère en cours ou exploré tous les fils de $S$.

Lorsque l'on arrive sur un noeud $S$ donné, on ne connaît pas *a priori* le nombre de ses fils. Pour ce faire, on mémorise avantageusement lors de l'exploration du noeud $S$ la taille $\Gamma(S)$ du sous-arbre qui en est issu. Ensuite, lors de l'exploration successive des fils $s_i$, on met a jour la variable *TailleSousArbresDesFils* :

$$TailleSousArbresDesFils = \sum_{j=0}^{i} \Gamma(s_j)$$

Et l'on sait que tous les fils $s_i$ de $S$ auront été explorés lorsque:

$$TailleSousArbresDesFils = \Gamma(S) - 1$$

Si tous les fils ont été explorés sans que le caractère en cours n'ait été trouvé, la chaîne de caractère complète $C$ ne correspond pas à une entrée du dictionnaire (une portion de $C$ peut néanmoins en faire partie). Si le caractère en cours a été trouvé pour l'un des fils $s_t$ alors $S=s_t$ et le cycle de recherche reprend avec le caractère suivant. Le processus est itéré jusqu'à ce que l'on atteigne une feuille de l'arbre. L'index recherché est le rang préfixe de cette feuille. Avantageusement, afin de pouvoir rechercher des mots qui sont préfixes l'un de l'autre, comme par exemple « bar » et « barrister » en Fig. 1, on peut ajouter, à la fin de chaque mot un marqueur de fin de mot, par exemple un caractère espace. Dans ce cas, toutes les feuilles de l'arbre portent des marqueurs de fin de mot.

On peut ainsi définir une fonction *ParcoursArbre* qui retourne à partir d'une chaîne de caractères *MotAnalyse*, le rang préfixe de la feuille atteinte au terme du parcours. Cette fonction utilise la représentation informatique de l'arbre selon l'invention. Son pseudo-code C est donné ci-après :

**Fonction** IndexPrefixe *ParcoursArbre* (chaine *MotAnalyse*, tableau *Bijection*)

**Debut**

$S$ = Racine;

*Prefixe(S)* = 0; // index préfixe de la racine

*TailleSousArbre(S)*= *Bijection* [*Prefixe(S)*] + 1;

*DernierPostfixe* = -1;

**Tant que** *TailleSousArbre (S)* différent de 1 {

$s$ = fils aîné de $S$;

*Prefixe(s)* = *Prefixe(S)* + 1;

*TailleSousArbresDesFils* = 0;

**Tant que** *TailleSousArbresDesFils* < *TailleSousArbre(S)* -1;

**Si** CaractèreEnCours correspond étiquette de $S$ vers $s$

**Alors** diriger le parcours vers le fils $s$ en faisant

$S=s$;

**Sinon** { $s_2$ =fils suivant de $S$ ;

*Postfixe(s)* = *Bijection* [*Prefixe(s)*] ;

*TailleSousArbre(s)* = *Postfixe(s)* - *DernierPostfixe*;

*Prefixe(s₂)* = *Prefixe(s)* + *TailleSousArbre(s)*;

*DernierPostfixe* = *Postfixe(s)*;

*TailleSousArbresDesFils* += *TailleSousArbre(s)*;

explorer le fils suivant en faisant

$s=s_2$

}

**Retourner** CodeParcoursIncomplet

}

**Retourner** *Prefixe (S)*;

Réciproquement, si l'on souhaite générer à partir d'un index *I* (supposé égal au rang préfixe d'une feuille de l'arbre) la chaîne de caractères de l'entrée correspondante du dictionnaire, on utilise un seconde méthode de parcours selon l'invention. Cette seconde méthode diffère de la première en ce que la sélection du noeud fils est désormais guidée par la comparaison du rang préfixe de ce noeud avec l'index *I* recherché. Plus précisément, le fils $s_i$ est sélectionné dès que la relation suivante est vérifiée :

$$RangPrefixe(s_{i+1})>I$$

L'index *I* est ainsi approché par valeurs croissantes de rang prefixe des noeuds explorés.

La seconde méthode fait appel au même calcul itératif des rangs prefixe des fils d'un noeud donné $S$ à partir des tailles respectives des sous-arbres $\Gamma(s_i)$. Le critère d'arrêt de l'exploration des fils $s_i$ d'un noeud $S$ donné est également basé sur une comparaison de $\Gamma(S)$ et de la somme des $\Gamma(s_i)$ pour les fils déjà explorés.

On peut définir une fonction *GenerationMot* qui retourne à partir d'un index *GuidePrefixe* la chaîne de caractères correspondante. Cette fonction utilise également là représentation informatique de l'arbre selon l'invention. Son pseudo-code C est donné ci-après :

**Fonction** chaîne *GenerationMot* (index *GuidePrefixe*, tableau *Bijection*)

**Debut**

$\quad$ $S$ = racine;

$\quad$ *Prefixe* $(S) = 0$; // index préfixe de la racine

$\quad$ *TailleSousArbre(S)= Bijection [Prefixe(S)] + 1*;

$\quad$ *DernierPostfixe* = -1;

$\quad$ **Tant que** *TailleSousArbre(S)* différent de 1 {

$\quad\quad$ $s$ = fils aîné de $S$;

$\quad\quad$ *Prefixe(s) = Prefixe(S) + 1*;

$\quad\quad$ *TailleSousArbresDesFils* = 0;

$\quad\quad$ **Tant que** *TailleSousArbresDesFils* < *TailleSousArbre(S) - 1* {

$\quad\quad\quad$ $s_2$ =fils suivant $S$;

$\quad\quad\quad$ *Postfixe(s) = Bijection [Prefixe(s)]*;

$\quad\quad\quad$ *TailleSousArbre(s) = Postfixe(s) – DernierPostfixe* ;

$\quad\quad\quad$ *Prefixe(s₂) = Prefixe(s) + TailleSousArbre(s)*;

```
Si GuidePrefixe < Prefixe(s₂) ;
    Alors {
        Choisir le parcours vers le fils précédent s en faisant
            S=s;
        mettre à jour ChaîneGénérée
    }
    Sinon {
        DernierPostfixe = Postfixe(s);
        TailleSousArbresDesFils += TailleSousArbre(s);
        explorer le descendant suivant en mettant
            s=s₂
    }
}
Retourner CodeParcoursIncomplet
}
Retourner ChaîneGénérée;
```

## Revendications

1. Représentation informatique d'un arbre orienté représentatif de l'organisation d'un ensemble de données, en particulier d'un dictionnaire de données, chaque donnée étant associée à un noeud particulier dudit arbre, **caractérisée en ce qu'**un premier rang étant associé à chaque noeud dudit arbre selon une première relation d'ordre total et un second rang étant associé à chaque noeud dudit arbre selon une seconde relation d'ordre total, elle comprend un tableau de valeurs stockées dans une mémoire, tel que le premier rang d'un noeud est représenté par une valeur qui est stockée à l'adresse du tableau représentative du second rang de ce noeud.

2. Représentation informatique selon la revendication 1, **caractérisée en ce que** la première relation d'ordre total est une combinaison d'une relation d'ordre de descendance ordonnant un noeud par rapport à ses descendants et d'une relation d'ordre de primogéniture ordonnant les noeuds fils d'un même noeud.

3. Représentation informatique selon la revendication 2, **caractérisée en ce qu'**un premier noeud de l'arbre est inférieur à un second noeud de l'arbre selon ladite première relation d'ordre total si le second noeud est un descendant du premier noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon la relation d'ordre de primogéniture.

4. Représentation informatique selon la revendication 2, **caractérisée en ce qu'**un premier noeud de l'arbre est supérieur à un second noeud de l'arbre selon ladite première relation d'ordre total si le second noeud est un descendant du premier noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon la relation d'ordre de primogéniture.

5. Représentation informatique selon l'une des revendications 2 à 4, **caractérisée en ce que** la seconde relation d'ordre total est une combinaison de la relation d'ordre inverse de ladite relation d'ordre de descendance et de ladite relation d'ordre de primogéniture.

6. Représentation informatique selon la revendication 5, **caractérisée en ce qu'**un premier noeud de l'arbre est inférieur à un second noeud de l'arbre selon ladite seconde relation d'ordre total si le premier noeud est un descendant du second noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon ladite relation d'ordre de primogéniture.

7. Représentation informatique selon la revendication 5, **caractérisée en ce qu'**un premier noeud de l'arbre est supérieur à un second noeuds de l'arbre selon ladite seconde relation d'ordre total si le premier noeud est un descendant du second noeud ou si, l'ancêtre commun au premier et au second noeuds ayant un premier fils dont descend le premier noeud ou confondu avec ce dernier et un second fils dont descend le second noeud ou confondu avec ce dernier, ledit premier fils est inférieur audit second fils selon ladite relation d'ordre de primogéniture.

8. Représentation informatique selon l'une des revendications 2 à 7, **caractérisée en ce que,** les données étant des suites de caractères d'un alphabet muni d'un ordre alphabétique, chaque arc dudit arbre étant associé à un caractère d'au moins une donnée, la relation d'ordre de primogéniture entre deux fils d'un même noeud est donnée par la relation d'ordre alphabétique entre les caractères associés aux arcs respectifs entre ledit noeud et ses deux fils.

9. Méthode de codage d'un arbre orienté représentatif de l'organisation d'un ensemble de données, notamment d'un dictionnaire, chaque donnée dudit ensemble étant associée à un noeud particulier dudit arbre, **caractérisée en ce que** l'on attribue à chaque noeud dudit arbre un premier et un second index, le premier index étant représentatif du rang du noeud selon une première relation d'ordre total ordonnant les noeuds dudit arbre, le second index étant représentatif du rang du noeud selon une seconde relation d'ordre total, la première relation d'ordre total étant une combinaison d'une relation d'un ordre de descendance ordonnant un noeud par rapport à ses descendants et d'une relation d'ordre de primogéniture ordonnant les noeuds fils d'un même noeud, la seconde relation d'ordre total étant une combinaison de la relation d'ordre inverse de ladite relation d'ordre de descendance et de ladite relation d'ordre de primogéniture, ladite méthode fournissant un tableau dans lequel sont rangées des valeurs représentatives desdits premiers index des noeuds dudit arbre à des adresses représentatives desdits seconds index des noeuds dudit arbre.

10. Méthode de codage selon la revendication 9, **caractérisée en ce qu'**elle comprend un appel récursif d'une étape de calcul fournissant pour un noeud quelconque de l'arbre, la taille du sous-arbre issu dudit noeud.

11. Méthode de codage selon la revendication 10, **caractérisée en ce que**, pour un premier fils et un second fils d'un même noeud, dit noeud père, adjacents dans une liste des fils ordonnée selon ladite relation l'ordre de primogéniture, l'étape de calcul détermine le premier index du second fils à partir du premier index du premier fils et de la taille du sous-arbre issu du premier fils, et le second index du second fils à partir du second index du premier fils et de la taille du sous-arbre issu du second fils.

12. Méthode de codage selon la revendication 11, **caractérisée en ce que** ladite étape de calcul détermine le premier index du fils classé premier dans ladite liste à partir du premier index dudit noeud père et le second index dudit noeud père à partir du second index du fils classé dernier dans ladite liste.

13. Méthode de codage selon l'une des revendications 10 à 12, **caractérisée en ce que** ladite étape de calcul détermine la taille du sous-arbre issu dudit noeud père à partir de la somme des tailles des sous-arbres issus de ses fils.

14. Méthode de codage selon l'une des revendications 9 à 13, **caractérisée en ce qu'**elle opère sur une première représentation dudit arbre au moyen de pointeurs dans laquelle, pour un noeud donné, un premier type de pointeur fournit un noeud fils selon la relation d'ordre de descendance et un second type de pointeur fournit la liste de ses autres fils.

15. Méthode de codage selon l'une des revendications 9 à 13, **caractérisée en ce qu'**elle fournit un tableau dans lequel sont rangées des valeurs représentatives desdits seconds index des noeuds dudit arbre à des adresses représentatives desdits premiers index des noeuds dudit arbre.

16. Méthode de codage d'une donnée d'entrée appartenant à un ensemble de données organisées selon une structure d'arbre orienté, notamment à un dictionnaire de données, les données étant formées de suites de caractères d'un alphabet muni d'un ordre alphabétique, chaque donnée étant associée à un noeud particulier dudit arbre et à chaque arc dudit arbre étant associé un caractère, **caractérisée en ce que**, ledit arbre étant représenté au moyen de la représentation informatique selon l'une des revendications 1 à 8, on parcourt l'arbre de noeud en noeud selon un chemin partant de la racine et l'on analyse ladite donnée d'entrée caractère par caractère, le noeud suivant d'un noeud courant dudit chemin étant choisi parmi les fils de ce dernier, le choix étant effectué au moyen d'une succession d'étapes de comparaison, chaque étape de comparaison comparant le caractère en cours de laite donnée d'entrée et le caractère associé à l'arc reliant le noeud courant à l'un de ses fils, le parcours n'étant interrompu que lorsque la ladite donnée d'entrée est entièrement analysée, la méthode fournissant comme valeur codée de ladite donnée d'entrée un index fonction de l'adresse du tableau de ladite représentation informatique représentative du dernier noeud dudit chemin.

17. Méthode de codage selon la revendication 16, **caractérisée en ce que** ledit index est égal à l'adresse représentative du dernier noeud dudit chemin.

18. Méthode de codage selon la revendication 16, **caractérisée en ce que** ledit index est égal à la valeur stockée dans ledit tableau à l'adresse représentative du dernier noeud dudit chemin

19. Méthode de codage selon l'une des revendications 16 à 18, **caractérisée en ce que** les fils successifs du noeud courant sont déterminés à partir de leurs adresses représentatives respectives dans le tableau de ladite représentation informatique, l'adresse représentative du fils suivant un fils courant étant obtenue à partir de l'adresse représentative du fils courant et de la taille du sous-arbre issu du fils courant.

20. Méthode de codage selon la revendication 19, **caractérisée en ce que** la taille du sous-arbre issu du fils courant est obtenue à partir de la valeur stockée dans ledit tableau à l'adresse représentative du fils courant et de la valeur stockée dans ledit tableau à l'adresse représentative du fils précédent.

21. Méthode de décodage d'un index représentatif d'une donnée appartenant à un ensemble de données organisées selon une structure d'arbre orienté, en particulier d'un dictionnaire de données, les données étant formées de suites de caractères d'un alphabet muni d'un ordre alphabétique, chaque donnée étant associée à un noeud particulier dudit arbre et à chaque arc dudit arbre étant associé un caractère, **caractérisée en ce que**, ledit arbre étant représenté au moyen de la représentation informatique selon l'une des revendications 1 à 8, on parcourt l'arbre selon un chemin partant de la racine, le noeud suivant un noeud courant dudit chemin étant choisi parmi les fils de ce dernier, le choix étant effectué au moyen d'une succession d'étapes de comparaison, chaque étape de comparaison comparant ledit index à un index représentatif de l'un desdits fils dans ladite représentation informatique, la méthode fournissant comme donnée décodée la chaîne des caractères associés aux arcs formant ledit chemin.

22. Méthode de décodage selon la revendication 21, **caractérisée en ce que** ledit index représentatif est une adresse dans ledit tableau de la représentation informatique.

23. Méthode de décodage selon la revendication 21, **caractérisée en ce que** ledit index représentatif est une valeur stockée dans ledit tableau de la représentation informatique.

24. Méthode de décodage selon l'une des revendications 21 à 23, **caractérisée en ce que** les fils successifs du noeud courant sont déterminés à partir de leurs adresses représentatives respectives dans le tableau de ladite représentation informatique, l'adresse représentative du fils suivant un fils courant étant obtenue à partir de l'adresse représentative du fils courant et de la taille du sous-arbre issu du fils courant.

25. Méthode de décodage selon la revendication 24, **caractérisée en ce que** la taille du sous-arbre issu du fils courant est obtenue à partir de la valeur stockée dans ledit tableau à l'adresse représentative du fils courant et de la valeur stockée dans ledit tableau à l'adresse représentative du fils précédent.

**Claims**

1. Computerized representation of an directed tree representative of the organization of a data set, in particular of a data dictionary, each data item being associated with a particular node of the said tree, **characterized in that**, a first rank being associated with each node of the said tree according to a first total order relation and a second rank being associated with each node of the said tree according to a second total order relation, it comprises an array of values stored in a memory, such that the first rank of a node is represented by a value which is stored at the array address representative of the second rank of this node.

2. Computerized representation according to Claim 1, **characterized in that** the first total order relation is a combination of a descending order relation ordering a node with respect to its descendants and of a primogeniture order relation ordering the child nodes of one and the same node.

3. Computerized representation according to Claim 2, **characterized in that** a first node of the tree is lower than a second node of the tree according to the said first total order relation if the second node is a descendant of the first node or if, the ancestor common to the first and to the second nodes having a first child from which the first node descends or which coincides with the latter and a second child from which the second node descends or which coincides with the latter, the said first child is lower than the said second child according to the primogeniture order relation.

4. Computerized representation according to Claim 2, **characterized in that** a first node of the tree is higher than a second node of the tree according to the said first total order relation if the second node is a descendant of the first node or if, the ancestor common to the first and to the second nodes having a first child from which the first node descends or which coincides with the latter and a second child from which the second node descends or which coincides with the latter, the said first child is lower than the said second child according to the primogeniture order relation.

5. Computerized representation according to one of Claims 2 to 4, **characterized in that** the second total order relation is a combination of the inverse order relation of the said descending order relation and of the said primogeniture order relation.

6. Computerized representation according to Claim 5, **characterized in that** a first node of the tree is lower than a second node of the tree according to the said second total order relation if the first node is a descendant of the second node or if, the ancestor common to the first and to the second nodes having a first child from which the first node descends or which coincides with the latter and a second child from which the second node descends or which coincides with the latter, the said first child is lower than the said second child according to the said primogeniture order relation.

7. Computerized representation according to Claim 5, **characterized in that** a first node of the tree is higher than a second node of the tree according to the said second total order relation if the first node is a descendant of the second node or if, the ancestor common to the first and to the second nodes having a first child from which the first node descends or which coincides with the latter and a second child from which the second node descends or which coincides with the latter, the said first child is lower than the said second child according to the said primogeniture order relation.

8. Computerized representation according to one of Claims 2 to 7, **characterized in that,** the data being series of characters of an alphabet having an alphabetical ordering, each arc of the said tree being associated with a character of at least one data item, the primogeniture order relation between two children of one and the same node is given by the alphabetic ordering relation between the characters associated with the respective arcs between the said node and its two children.

9. Procedure for coding a directed tree representative of the organization of a data set, especially of a dictionary, each data item of the said set being associated with a particular node of the said tree, **characterized in that** a first and a second index are allocated to each node of the said tree, the first index being representative of the rank of the node according to a first total order relation ordering the nodes of the said tree, the second index being representative of the rank of the node according to a second total order relation, the first total order relation being a combination of a relation of a descending order relation ordering a node with respect to its descendants and of a primogeniture order relation ordering the child nodes of one and the same node, the second total order relation being a combination of the inverse order relation of the said descending order relation and of the said primogeniture order relation, the said procedure providing an array in which are arranged values representative of the said first indices of the nodes of the said tree at addresses representative of the said second indices of the nodes of the said tree.

10. Coding procedure according to Claim 9,
**characterized in that** it comprises a recursive call of a calculation step providing, for an arbitrary node of the tree, the size of the sub-tree arising from the said node.

**11.** Coding procedure according to Claim 10,
**characterized in that**, for a first child and a second child of one and the same node, called a parent node, that are adjacent in a list of the children ordered according to the said relation the primogeniture order, the calculation step determines the first index of the second child on the basis of the first index of the first child and of the size of the sub-tree arising from the first child, and the second index of the second child on the basis of the second index of the first child and of the size of the sub-tree arising from the second child.

**12.** Coding procedure according to Claim 11,
**characterized in that** the said calculation step determines the first index of the child ranked first in the said list on the basis of the first index of the said parent node and the second index of the said parent node on the basis of the second index of the child ranked last in the said list.

**13.** Coding procedure according to one of Claims 10 to 12, **characterized in that** the said calculation step determines the size of the sub-tree arising from the said parent node on the basis of the sum of the sizes of the sub-trees arising from its children.

**14.** Coding procedure according to one of Claims 9 to 13, **characterized in that** it operates on a first representation of the said tree by means of pointers in which, for a given node, a first type of pointer provides a child node according to the descending order relation and a second type of pointer provides the list of its other children.

**15.** Coding procedure according to one of Claims 9 to 13, **characterized in that** it provides an array in which are arranged values representative of the said second indices of the nodes of the said tree at addresses representative of the said first indices of the nodes of the said tree.

**16.** Procedure for coding an input data item belonging to a data set organized according to a directed-tree structure, especially to a data dictionary, the data being formed of series of characters of an alphabet having an alphabetical ordering, each data item being associated with a particular node of the said tree and with each arc of the said tree there being associated a character, **characterized in that,** the said tree being represented by means of the computerized representation according to one of Claims 1 to 8, the tree is traversed from node to node according to a path starting from the root and the said input data item is analysed character by character, the next node following a current node of the said path being chosen from among the children of the latter, the choice being performed by means of a succession of comparison steps, each comparison step comparing the character in progress of the said input data item and the character associated with the arc linking the current node to one of its children, the traversal being interrupted only when the said input data item is entirely analysed, the procedure providing as coded value of the said input data item an index dependent on the array address of the said computerized representation representative of the last node of the said path.

**17.** Coding procedure according to Claim 16,
**characterized in that** the said index is equal to the address representative of the last node of the said path.

**18.** Coding procedure according to Claim 16,
**characterized in that** the said index is equal to the value stored in the said array at the address representative of the last node of the said path.

**19.** Coding procedure according to one of Claims 16 to 18, **characterized in that** the successive children of the current node are determined on the basis of their respective representative addresses in the array of the said computerized representation, the address representative of the child following a current child being obtained on the basis of the address representative of the current child and of the size of the sub-tree arising from the current child.

**20.** Coding procedure according to Claim 19,
**characterized in that** the size of the sub-tree arising from the current child is obtained on the basis of the value stored in the said array at the address representative of the current child and of the value stored in the said array at the address representative of the previous child.

**21.** Procedure for decoding an index representative of a data item belonging to a data set organized according to an directed-tree structure, in particular of a data dictionary, the data being formed of series of characters of an alphabet having an alphabetical ordering, each data item being associated with a particular node of the said tree and with each arc of the said tree there being associated a character, **characterized in that**, the said tree being represented by means of the computerized representation according to one of Claims 1 to 8, the tree is traversed according to a path starting from the root, the node following a current node of the said path being chosen from among the children of the latter, the choice being performed by means of a succession of comparison steps, each comparison step comparing the said index with an index representative of one of the said children in the said computerized representation, the procedure providing as decoded data item the string of the characters associated with the arcs forming the said path.

**22.** Decoding procedure according to Claim 21,
**characterized in that** the said representative index is an address in the said array of the computerized representation.

**23.** Decoding procedure according to Claim 21,
**characterized in that** the said representative index is a value stored in the said array of the computerized representation.

**24.** Decoding procedure according to one of Claims 21 to 23, **characterized in that** the successive children of the current node are determined on the basis of their respective representative addresses in the array of the said computerized representation, the address representative of the child following a current child being obtained on the basis of the address representative of the current child and of the size of the sub-tree arising from the current child.

**25.** Decoding procedure according to Claim 24,
**characterized in that** the size of the sub-tree arising from the current child is obtained on the basis of the value stored in the said array at the address representative of the current child and of the value stored in the said array at the address representative of the previous child.

**Patentansprüche**

**1.** Computerdarstellung eines gerichteten Baums, der die Organisation einer Datengruppe, insbesondere eines Datenwörterbuchs, darstellt, wobei jede Dateneingabe mit einem bestimmten Knoten des Baums verbunden ist, **dadurch gekennzeichnet, dass** ein erster Rang mit jedem Knoten des Baums gemäß einer ersten Relation der Gesamtordnung verbunden ist und dass ein zweiter Rang mit jedem Knoten des Baums gemäß einer zweiten Relation der Gesamtordnung verbunden ist, sie eine Tabelle von in einem Speicher gespeicherten Werten umfasst, so dass der erste Rang eines Knotens durch einen Wert dargestellt ist, der an der Adresse der den zweiten Rang dieses Knotens darstellenden Tabelle gespeichert ist.

**2.** Computerdarstellung nach Anspruch 1, **dadurch gekennzeichnet, dass** die erste Relation der Gesamtordnung eine Kombination einer Relation einer absteigenden Ordnung, die einen Knoten bezüglich seiner Nachkommenschaft ordnet, und einer Vorfahrenordnung ist, die die Nachkommenknoten eines selben Knotens ordnet.

**3.** Computerdarstellung nach Anspruch 2, **dadurch gekennzeichnet, dass** ein erster Knoten des Baums gemäß der ersten Relation der Gesamtordnung niedriger als ein zweiter Knoten des Baums ist, wenn der zweite Knoten ein Nachkomme des ersten Knotens ist oder wenn der gemeinsame Vorfahre des ersten und des zweiten Knotens einen ersten Sohn hat, von dem der erste Knoten abstammt oder mit ihm zusammenfällt, und einen zweiten Sohn hat, von dem der zweite Knoten abstammt oder mit ihm zusammenfällt, wobei der erste Sohn gemäß der Relation der Vorfahrenordnung niedriger als der zweite Sohn ist.

**4.** Computerdarstellung nach Anspruch 2, **dadurch gekennzeichnet, dass** ein erster Knoten gemäß der ersten Relation der Gesamtordnung über einem zweiten Knoten des Baums ist, wenn der zweite Knoten ein Nachkomme des ersten Knotens ist oder wenn der gemeinsame Vorfahre des ersten und des zweiten Knotens einen ersten Sohn hat, von dem der erste Knoten abstammt oder mit ihm zusammenfällt, und einen zweiten Sohn hat, von dem der zweite Knoten abstammt oder mit ihm zusammenfällt, wobei der erste Sohn gemäß der Relation der Vorfahrenordnung niedriger als der zweite Sohn ist.

**5.** Computerdarstellung nach einem der Ansprüche 2 bis 4, **dadurch gekennzeichnet, dass** die zweite Relation der Gesamtordnung eine Kombination aus der Relation der umgekehrten Nachkommenordnung und der Relation der Vorfahrenordnung ist.

6.  Computerdarstellung nach Anspruch 5, **dadurch gekennzeichnet, dass** ein erster Knoten des Baums gemäß der zweiten Relation der Gesamtordnung unter einem zweiten Knoten des Baums ist, wenn der erste Knoten ein Nachkomme des zweiten Knotens ist oder wenn der gemeinsame Vorfahre des ersten und des zweiten Knotens einen ersten Sohn hat, von dem der erste Knoten abstammt oder mit ihm zusammenfällt, und einen zweiten Sohn hat, von dem der zweite Knoten abstammt oder mit ihm zusammenfällt, wobei der erste Sohn gemäß der Relation der Vorfahrenordnung niedriger als der zweite Sohn ist.

7.  Computerdarstellung nach Anspruch 5, **dadurch gekennzeichnet, dass** ein erster Knoten des Baums gemäß der zweiten Relation der Gesamtordnung über einem zweiten Knoten des Baums ist, wenn der erste Knoten ein Nachkomme des zweiten Knotens ist oder wenn der gemeinsame Vorfahre des ersten Knotens und des zweiten Knotens einen ersten Sohn hat, von dem der erste Knoten abstammt oder mit ihm zusammenfällt, und einen zweiten Sohn hat, von dem der zweite Knoten abstammt oder mit ihm zusammenfällt, wobei der erste Sohn gemäß der Relation der Vorfahrenordnung niedriger als der zweite Sohn ist.

8.  Computerdarstellung nach einem der Ansprüche 2 bis 7, **dadurch gekennzeichnet, dass** die Daten Zeichenfolgen aus einem mit einer alphabetischen Ordnung ausgestatteten Alphabet sind, wobei jeder Bogen des Baums mit einem Zeichen mindestens einer Dateneingabe verbunden ist, und wobei die Relation der Vorfahrenordnung zwischen den beiden Söhnen eines selben Knotens durch die Relation der alphabetischen Ordnung zwischen den mit den jeweiligen Bögen verbundenen Zeichen zwischen dem Knoten und seinen beiden Söhnen gegeben wird.

9.  Verfahren zum Codieren eines gerichteten Baums, der die Organisation einer Datengruppe wiedergibt, insbesondere eines Wörterbuchs, wobei jede Dateneingabe der Datengruppe mit einem bestimmten Knoten des Baums verbunden ist, **dadurch gekennzeichnet, dass** jedem Knoten des Baums ein erster und ein zweiter Index zugewiesen wird, wobei der erste Index den Rang des Knotens gemäß einer ersten Relation der Gesamtordnung, die die Knoten des Baums ordnet, darstellt, und der zweite Index den Rang des Knotens gemäß einer zweiten Relation der Gesamtordnung darstellt, wobei die erste Relation der Gesamtordnung eine Kombination aus einer Relation einer absteigenden Ordnung, die einen Knoten bezüglich seiner Nachkommen ordnet, und einer Vorfahrenordnung, die die Nachkommenknoten eines selben Knotens ordnet, ist, und wobei die zweite Relation der Gesamtordnung eine Kombination aus der Relation der umgekehrten Ordnung der Relation der absteigenden Ordnung und der Relation der Vorfahrenordnung ist, und wobei das Verfahren eine Tabelle, in der die Werte, welche den ersten Index der Knoten des Baums darstellen, an den Adressen, die den zweiten Index der Knoten des Baums darstellen, geordnet sind bereitstellt.

10. Verfahren zum Codieren nach Anspruch 9, **dadurch gekennzeichnet, dass** es ein wiederholtes Aufrufen eines Berechnungsschritts umfasst, welcher für jeden Knoten des Baums die Größe des aus diesem Knoten entstandenen Unterbaums bereitstellt.

11. Verfahren zum Codieren nach Anspruch 10, **dadurch gekennzeichnet, dass** für einen ersten Sohn und einen zweiten Sohn eines selben Knotens, der Vaterknoten genannt wird, die in einer Liste von Söhnen, welche nach der Relation der Vorfahrenordnung geordnet sind, benachbart sind, der Berechnungsschritt den ersten Index des zweiten Sohns aus dem ersten Index des ersten Sohns und der Größe des aus dem ersten Sohn entstandenen Unterbaums, und den zweiten Index des zweiten Sohns aus dem zweiten Index des ersten Sohns und der Größe des aus dem zweiten Sohn entstandenen Unterbaums bestimmt.

12. Verfahren zum Codieren nach Anspruch 11, **dadurch gekennzeichnet, dass** der Berechnungsschritt den ersten Index des Sohns, der in der Liste als erster eingeordnet ist, aus dem ersten Index des Vaterknotens bestimmt, und den zweiten Index des Vaterknotens aus dem zweiten Index des Sohns, der in der Liste als der letzte eingeordnet ist, bestimmt.

13. Verfahren zum Codieren nach einem der Ansprüche 10 bis 12, **dadurch gekennzeichnet, dass** der Berechnungsschritt die Größe des Unterbaums, der aus dem Vaterknoten entsteht, aus der Summe der Größen der aus seinen Söhnen entstandenen Unterbäumen bestimmt.

14. Verfahren zum Codieren nach einem der Ansprüche 9 bis 13, **dadurch gekennzeichnet, dass** es an einer ersten Darstellung des Baums mittels Zeigern fungiert, in der für einen gegebenen Knoten eine erste Zeigerart einen Sohnknoten gemäß der Relation der absteigenden Ordnung bereitstellt und eine zweite Zeigerart die Liste seiner anderen Söhne bereitstellt.

**15.** Verfahren zum Codieren nach einem der Ansprüche 9 bis 13, **dadurch gekennzeichnet, dass** es eine Tabelle, in der die Werte, die den zweiten Index der Knoten des Baums darstellen, an den Adressen, die den ersten Index der Knoten des Baums darstellen, geordnet sind, bereitstellt.

**16.** Verfahren zum Codieren einer Dateneingabe, die zu einer Datengruppe gehört, welche in einer Struktur eines gerichteten Baums organisiert ist, insbesondere zu einem Wörterbuch, wobei die Dateneingaben aus Zeichenfolgen eines mit einer alphabetischen Ordnung ausgestatteten Alphabets gebildet sind, und wobei jede Dateneingabe mit einem bestimmten Knoten des Baums verbunden ist und ein Zeichen mit jedem Bogen des Baums verbunden ist, **dadurch gekennzeichnet, dass** der Baum mittels der Computerdarstellung nach einem der Ansprüche 1 bis 8 dargestellt ist und dass der Baum Knoten für Knoten entlang einem von der Wurzel ausgehenden Weg durchlaufen und die Dateneingabe Zeichen für Zeichen analysiert wird, wobei der Knoten, der auf einen aktuellen Knoten des Wegs folgt, unter den Söhnen des Letzteren ausgewählt wird, wobei die Auswahl mittels einer Abfolge von Vergleichsschritten getroffen wird, wobei jeder Vergleichsschritt das aktuelle Zeichen der Dateneingabe und das mit einem Bogen, der den aktuellen Knoten mit einem seiner Söhne verbindet, verbundene Zeichen vergleicht, wobei der Durchlauf nur dann unterbrochen wird, wenn die Dateneingabe vollständig analysiert ist, und wobei das Verfahren als codierten Wert der Dateneingabe einen Funktionsindex der Adresse der Tabelle der Computerdarstellung bereitstellt, welche den letzten Knoten des Wegs darstellt.

**17.** Verfahren zum Codieren nach Anspruch 16, **dadurch gekennzeichnet, dass** der Index gleich der Adresse ist, die den letzten Knoten des Wegs darstellt.

**18.** Verfahren zum Codieren nach Anspruch 16, **dadurch gekennzeichnet, dass** der Index gleich dem Wert ist, der in der Tabelle an der Adresse, die den letzten Knoten des Wegs darstellt, gespeichert ist.

**19.** Verfahren zum Codieren nach einem der Ansprüche 16 bis 18, **dadurch gekennzeichnet, dass** die nachfolgenden Söhne des aktuellen Knotens aus ihren Adressen bestimmt werden, welche jeweils in der Tabelle der Computerdarstellung dargestellt sind, wobei die den auf einen aktuellen Sohn folgenden Sohn darstellende Adresse aus der den aktuellen Sohn darstellenden Adresse und der Größe des aus dem aktuellen Sohn entstandenen Unterbaums erhalten wird.

**20.** Verfahren zum Codieren nach Anspruch 19, **dadurch gekennzeichnet, dass** die Größe des aus dem aktuellen Sohn entstandenen Unterbaums aus dem in der Tabelle an der Adresse, die den aktuellen Sohn darstellt, gespeicherten Wert und dem Wert, der in der Tabelle an der Adresse des vorhergehenden Sohns gespeichert ist, erhalten wird.

**21.** Verfahren zum Decodieren eines Index einer Dateneingabe, die zu einer Datengruppe gehört, welche in einer Struktur eines gerichteten Baums organisiert ist, insbesondere eines Datenwörterbuchs, wobei die Dateneingaben aus Zeichenfolgen eines mit einer alphabetischen Ordnung ausgestatteten Alphabets gebildet sind, wobei jede Dateneingabe mit einem bestimmten Knoten des Baums verbunden ist und ein Zeichen mit jedem Bogen des Baums verbunden ist, **dadurch gekennzeichnet, dass** der Baum mittels der Computerdarstellung nach einem der Ansprüche 1 bis 8 dargestellt ist und der Baum entlang eines von der Wurzel ausgehenden Wegs durchlaufen wird, wobei der auf einen aktuellen Knoten folgende Knoten unter den Söhnen des Letzteren ausgewählt wird, wobei die Auswahl mittels einer Abfolge von Vergleichsschritten erfolgt und jeder Vergleichsschritt den Index mit einem Index vergleicht, der einen der Söhne in der Computerdarstellung darstellt, wobei das Verfahren als decodierte Dateneingabe die mit den den Weg bildenden Bögen verbundene Zeichenkette bereitstellt.

**22.** Verfahren zum Decodieren nach Anspruch 21, **dadurch gekennzeichnet, dass** es sich bei dem darstellenden Index um eine Adresse in der Tabelle der Computerdarstellung handelt.

**23.** Verfahren zum Decodieren nach Anspruch 21, **dadurch gekennzeichnet, dass** es sich bei dem darstellenden Index um einen Wert, der in der Tabelle der Computerdarstellung gespeichert ist, handelt.

**24.** Verfahren zum Decodieren nach einem der Ansprüche 21 bis 23, **dadurch gekennzeichnet, dass** die nachfolgenden Söhne des aktuellen Knotens aus ihren jeweiligen darstellenden Adressen in der Tabelle der Computerdarstellung bestimmt werden, wobei die Adresse, die den auf einen aktuellen Sohn folgenden Sohn bestimmt, aus der Adresse, die den aktuellen Sohn darstellt, und der Größe des aus dem aktuellen Sohn entstandenen Unterbaums erhalten wird.

**25.** Verfahren zum Decodieren nach Anspruch 24, **dadurch gekennzeichnet, dass** die Größe des aus dem aktuellen Sohn entstandenen Unterbaums aus dem in der Tabelle an der Adresse, die den aktuellen Sohn darstellt, gespeicherten Wert und dem in der Tabelle an der Adresse, die den vorhergehenden Sohn darstellt, gespeicherten Wert erhalten wird.

**Fig. 1**

Fig. 2A

Fig. 2B

EP 1 483 693 B1

**Fig. 3A**

| **0** | **1** | **2** | **3** | **4** | **5** | **6** | **7** | **8** | **9** | **10** | **11** | **12** | **13** | **14** | **15** | **16** | **17** | **18** | **19** | **20** | **21** | **22** |
|---|---|---|---|---|---|---|---|---|---|---|---|---|---|---|---|---|---|---|---|---|---|---|
| 22 | 5 | 3 | 2 | 0 | 1 | 4 | 19 | 12 | 6 | 10 | 7 | 8 | 9 | 11 | 18 | 13 | 17 | 14 | 15 | 16 | 20 | 21 |

*T*

**Fig. 3B**

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|
| **4** | **5** | **3** | **2** | **6** | **1** | **9** | **11** | **12** | **13** | **10** | **14** | **8** | **16** | **18** | **18** | **20** | **17** | **15** | **7** | **21** | **22** | **0** |

*T⁻¹*

**Fig. 3C**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHANG H.** Bubble structure and operation to facilitate free traversal. *IBM Technical disclosure Bulletin,* vol. 26 (9